# EUROPÄISCHE PATENTANMELDUNG

(11) **EP 1 610 028 A1**
(43) Veröffentlichungstag der Anmeldung: **28.12.2005**
(21) Anmeldenummer: 04014670.6
(22) Anmeldetag: 23.06.2004
(51) Int. Cl.: F16D 69/02

(54) **Verfahren zur Herstellung einer Reibmaterialmasse sowie aus dieser hergestellte Reibbeläge**

(71) Anmelder: APTEC Reibtechnik GmbH, 57577 Hamm/Sieg (DE)
(72) Erfinder: Spandern, Christian, 57578 Elkenroth (DE); Wolf, Sabine, 57612 Obererbach (DE)
(74) Vertreter: Schubert, Siegmar

(57) **Zusammenfassung**

Nach einem Verfahren zur Herstellung einer Reibmaterialmasse, insbesondere für Reibbeläge in Fahrzeugen, werden im wesentlichen Fasermaterial, Füllstoffe, Gleitmittel, Metallanteile und Bindemittel feuchtaufbereitet. Damit aus der Reibmaterialmasse Reibbeläge gesteigerter Thermostabilität hergestellt werden können, wird als Bindemittel der Reibmaterialmasse Wasserglas verwendet.

## Beschreibung

Die Erfindung betrifft ein Verfahren zur Herstellung einer Reibmaterialmasse, insbesondere für Reibbeläge in Fahrzeugen, nach dem Oberbegriff des Anspruchs 1.

Ein weiterer Aspekt der Erfindung betrifft aus dieser Reibmaterialmasse hergestellte Reibbeläge.

Die Reibmaterialmasse dient zur Herstellung von Reibbelägen als gepreßte, gehärtete Formkörper, wie Scheiben-, Trommel- und Kupplungsbelägen, die eingesetzt werden, um bewegte Teile abzubremsen bzw. kraftschlüssig zu verbinden. Ein wesentliches Einsatzgebiet für Reibbeläge sind Fahrzeuge, insbesondere Kraftfahrzeuge, Schienen- und Luftfahrzeuge. Aber auch in maschinellen Ausrüstungen werden Reibbeläge verwendet.

Bekannte Reibmaterialmassen, die auch als Reibbelagsmischungen bezeichnet werden können, umfassen Armierungsfasern, wie Glas, Aramid, PAN, Viskose; Füllstoffe, wie Schwerspat, Kaolin oder Glimmer; Metalle in Form von Pulver, Spänen oder Drähten; Gleitmittel bzw. Festschmierstoffe, wie Antimonsulfid, Molybdänsulfid oder Graphit. Verbunden werden diese Komponenten durch wenigstens ein organisches Bindemittel wie Phenolharze, Kautschuktypen, wie SBR oder NBR. - Für feuchtaufbereitete Reibmaterialmassen werden auch lösungsmittelhaltige und wässrige Resole eingesetzt.

Gemeinsam ist bei allen Anwendungen der Reibbeläge, daß sie eine möglichst weitgehende Temperaturkonstanz des Reibwerts bzw. des Reibbeiwerts aufweisen. Weiterhin sollen sie das Gegenmaterial des Gegenstücks, beispielsweise eine Graugußbremsscheibe oder Druckplatte in einer Kupplung möglichst wenig angreifen und selbst verschleißarm sein. Wesentlich ist auch eine Formkonstanz bei hohen Temperaturen.

Man hat bereits versucht, die produktspezifischen Anforderungen der Reibbeläge, insbesondere durch Auswahl des Bindemittels zu erfüllen, wobei beispielsweise bei der Verwendung von Novolak-Hexamethylentetramin-Pulverharzen die Basis Novolak physikalisch und chemisch modifiziert oder die Vernetzungsdichte des Materials durch unterschiedlichen Hexamethylentetramingehalt des Pulverharzes beeinflußt wurde. Dabei erfolgte eine Beeinflussung der Temperaturstabilität, insbesondere durch Modifizierung mit Phosphor-, Bor- und Siliziumverbindungen (Kunststoffhandbuch, Band 10 (Duroplaste), herausgegeben von Prof. Dr. Wilbrand Woebcken, 2. Auflage 1988, Carl Hanser Verlag, München, Wien, ISBN 3-446-14418-8).

Gleichwohl treten bei der Verwendung organisch gebundener Reibbeläge immer noch Zersetzungsreaktionen der organischen Bestandteile bei hoher thermischer Beanspruchung auf, die erhöhten Verschleiß- und Fadingerscheinungen zur Folge haben. Dabei ist zu berücksichtigen, daß z.B. in Scheibenbremsen Temperaturspritzen bis 1000°C auftreten können. Aufgrund anwachsender Motorleistungen und Fahrzeuggewichte und neuer Technologien, wie beispielsweise Doppelschaltgetrieben, werden an Reibbeläge immer höhere Anforderungen hinsichtlich der Temperaturstabilität bzw. Thermostabilität gestellt.

Der vorliegenden Erfindung liegt daher die Aufgabe zugrunde, eine Reibmaterialmasse zu schaffen, aus der Reibbeläge gesteigerter Thermostabilität hergestellt werden können, und zwar ohne Einbußen an die Komforteigenschaften der Reibbeläge, d.h. Quietsch- und Rubbelfreiheit, und mit möglichst geringem Herstellaufwand.

Diese Aufgabe wird erfindungsgemäß dadurch gelöst, daß anstelle bisher üblicher Bindemittel Wasserglas verwendet wird.

Mit diesem überraschend einfachen Bindemittel können Reibmaterialmassen für Reibbeläge hergestellt werden, die auch bei hohen Temperaturen weit über 500°C keine Zersetzungsreaktionen zeigen, gleichbleibende Reibbeiwerte aufweisen und stabile Reibschichten ausbilden, in denen die eigentliche Reibarbeit geleistet wird. Dementsprechend gering bzw. abwesend sind Fadingerscheinungen. Die Verschleißraten sind in dem hohen Temperaturbereich stabil. - Außer der Verwendung des Wasserglases statt organischer Bindemittel ist es somit nicht unbedingt erforderlich, bisherige Stoffkomponenten der Reibmaterialmasse auszutauschen.

Als Wasserglas kommen sowohl Kalium- als auch Natriumsilikate in Betracht.

Die nachfolgenden Bemessungsangaben beziehen sich auf praktisch reine Kaliumsilikate und deren viskosewässrige Lösungen.

Es hat sich herausgestellt, daß in einem weiten Bereich des Bindemittelanteils sehr brauchbare Reibmaterialmassen hergestellt werden können, und zwar nach Anspruch 2 mit 10 bis 70 Gewichtsprozent Wasserglas bezogen auf die gesamte trockene Reibmaterialmasse.

Dabei können sich die Anteile der übrigen Bestandteile in den in Anspruch 3 angegebenen Bereichen befinden. Zwei Naßrezepturen für die angegebenen Grenzwerte des Wasserglasanteils von 10 Gewichtsprozent und 70 Gewichtsprozent, die sich jeweils auf den gesamten Trockenanteil in den Rezepturen beziehen, sind weiter unten spezifiziert.

Gemäß dem weiteren Aspekt der Erfindung bestehen somit die Reibbeläge, insbesondere für Fahrzeuge, aus der wie oben angegeben hergestellten Reibmaterialmasse mit den oben genannten vorteilhaften Eigenschaften.

Im nachfolgenden werden die beiden Naßrezepturen für die Reibmaterialmasse als konkrete Beispiele angegeben:

| | Rezeptur 1 Gewichtsprozent | Rezeptur 2 Gewichtsprozent |
|---|---|---|
| Wasserglas | 10 | 70 |
| Glimmer | 10 | 5 |
| Schwerspat | 10 | 5 |
| Glasfasern | 14 | 5 |
| Graphit | 20 | 10 |
| Kupfer | 36 | 5 |
| Wasser | 15 | 105 |

Zu der Herstellung der Reibbeläge aus einer solchen feuchtaufbereiteten Reibmaterialmasse wird das Wasser in nachfolgenden Trocknungsprozessen wieder entfernt. Im übrigen erfolgt die weitere Herstellung der Reibbeläge konventionell.

Reibbeläge aus einer Reibmaterialmasse, die nach jeder der beiden oben genannten Rezepturen hergestellt wurden, zeigten keine Zersetzungsreaktionen bis 700°C. Der Reibwert blieb bis mindestens 550°C stabil, wobei höhere Temperaturen im Test nicht erzeugt werden konnten. Dies beinhaltet auch fehlende Fadingerscheinungen bis zu der genannten Temperatur. Es bildete sich eine stabile Reibschicht bis mindestens 550°C aus. Die Verschleißraten waren zumindest bis in diesen hohen Temperaturbereich stabil.

## Patentansprüche

1. Verfahren zur Herstellung einer Reibmaterialmasse, insbesondere für Reibbeläge in Fahrzeugen, welche im wesentlichen Fasermaterial, Füllstoffe, Gleitmittel, Metallanteile und Bindemittel enthält und feuchtaufbereitet wird,
**dadurch gekennzeichnet,**
**daß** als Bindemittel Wasserglas verwendet wird.

2. Verfahren zur Herstellung einer Reibmaterialmasse nach Anspruch 1,
**dadurch gekennzeichnet,**
**daß** 10 - 70 Gewichtsprozent Wasserglas bezogen auf die gesamte trockene Reibmaterialmasse eingesetzt wird.

3. Verfahren nach Anspruch 2,
**dadurch gekennzeichnet,**
**daß** die gesamte Reibmaterialmasse
10 - 70 % Wasserglas
10 - 5 % Glimmer
10 - 5 % Schwerspat
14 - 5 % Glasfasern
20 - 10 % Graphit
36 - 5 % Kupfer
15 - 105 % Wasser
enthält, wobei es sich um Gewichtsprozent bezogen auf die gesamte trockene Reibmaterialmasse handelt.

4. Reibbeläge, insbesondere für Fahrzeuge, welche aus Reibmaterialmasse nach wenigstens einem der Ansprüche 1 - 4 hergestellt sind.
